(19) Europäisches Patentamt
European Patent Office
Office européen des brevets

(11) **EP 4 589 474 A1**

(12) **EUROPEAN PATENT APPLICATION**

(43) Date of publication:
**23.07.2025 Bulletin 2025/30**

(21) Application number: **25152292.6**

(22) Date of filing: **16.01.2025**

(51) International Patent Classification (IPC):
**G06N 3/044** (2023.01)       **G06N 3/0475** (2023.01)

(52) Cooperative Patent Classification (CPC):
**G06N 3/044; G06N 3/045; G06N 3/047; G06N 3/0475; G06N 3/08; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2024 KR 20240008854**
**05.04.2024 KR 20240046554**

(71) Applicants:
• **Samsung Electronics Co., Ltd.**
**Suwon-si, Gyeonggi-do 16677 (KR)**
• **Ulsan National Institute of Science and Technology**
**(UNIST)**
**Eonyang-eup Ulju-gun**
**Ulsan 44919 (KR)**

(72) Inventors:
• **Baek, Woongki**
**16678 Suwon-si, Gyeonggi-do (KR)**
• **Kim, Sowoong**
**44919 Ulsan (KR)**
• **Sim, Eunyeong**
**44919 Ulsan (KR)**
• **Shin, Youngsam**
**16678 Suwon-si, Gyeonggi-do (KR)**

(74) Representative: **Grünecker Patent- und Rechtsanwälte**
**PartG mbB**
**Leopoldstraße 4**
**80802 München (DE)**

(54) **METHOD AND APPARATUS FOR INFERENCE USING GENERATIVE MODEL**

(57)    A method and an apparatus for inference using a generative model are provided. The method includes generating, by the one or more first processors executing the one or more transformer layers in a first decoding stage, a first output token by using a first input sequences based on a first input token, and generating, by the one or more first processors executing the one or more transformer layers in a second decoding stage, a second output token by using a second input sequence based on a second input token corresponding to the first output token.

FIG. 1

EP 4 589 474 A1

**Description**

BACKGROUND

1. Field of the Invention

Embodiments of the present disclosure relate to a method and apparatus for inference using a generative model.

2. Description of the Related Art

Generative models, particularly those utilizing machine learning and artificial intelligence, have revolutionized various domains, including natural language processing, image generation, and predictive analytics. The models are capable of learning complex patterns from data and generating new, plausible data points that adhere to the learned distribution.

In some cases, generative models may be used for implementing a technical automation of a process. For example, artificial intelligence models (e.g., neural network models) may be implemented to provide connections between input patterns and output patterns after considerable training. However, despite the capabilities of these models, the application of generative models for real-time inference and decision-making remains a challenging task due to the computational complexity and resource demands. Therefore, there is a need in the art for methods that can perform inference of a generative model while utilizing reduced computational resources.

SUMMARY

The invention is claimed in the independent claims. Preferred embodiments are specified in the dependent claims.

The present disclosure describes systems and methods for performing inference of a generative model. Embodiments of the present disclosure include a generative model that includes a transformer layer configured to perform an attention mechanism. In some cases, the transformer layer includes a self-attention sub-layer and a multilayer perception (MLP) sub-layer. An embodiment includes an activation sequence caching technique that may be applied to the self-attention sub-layer. In some cases, the activation sequence caching technique may be used for caching a sequence of activations generated when performing the generative inference, thereby enhancing the performance of the process and enabling memory usage reduction.

According to an aspect, there is provided a method performed by one or more first processors using a generative model including one or more transformer layers, the method including generating, by the one or more first processors executing the one or more transformer layers in a first decoding stage, a first output token by using a first input sequence based on a first input token, and generating, by the one or more first processors executing the one or more transformer layers in a second decoding stage, a second output token by using a second input sequence based on a second input token corresponding to the first output token, wherein the second input sequence includes the first input sequence and a second input tensor of the second decoding stage.

According to another aspect, there is provided an electronic device including a first memory configured to store parameters of a generative model including one or more transformer layers, and one or more first processors configured to generate a first output token by executing the one or more transformer layers by using a first input sequence based on a first input token in a first decoding stage, and to generate a second output token by executing the one or more transformer layers by using a second input sequence based on a second input token based on a second input token corresponding to the first output token, wherein the second input sequence includes the first input sequence and a second input tensor of the second decoding stage.

According to an aspect, there is provided a method performed by one or more first processors using a generative model including one or more transformer layers, the method including obtaining a first input sequence comprising a first input token, generating, by one or more first processors executing a generative model including one or more transformer layers, a first output token, caching the first input sequence and the first output token in a memory corresponding to one or more second processors other than the one or more first processors, obtaining a second input sequence by loading the first input sequence and the first output token from the memory corresponding to one or more second processors, and generating, by the one or more first processors executing the generative model, a second output token based on the second input sequence.

Additional aspects of embodiments will be set forth in part in the description which follows and, in part, will be apparent from the description, or may be learned by practice of the disclosure.

BRIEF DESCRIPTION OF THE DRAWINGS

These and/or other aspects, features, and advantages of the invention will become apparent and more readily appreciated from the following description of embodiments, taken in conjunction with the accompanying drawings of which:

FIG. 1 is a diagram illustrating an example of an inference operation of a generative model according to an embodiment;
FIG. 2 is a diagram illustrating an example of a data caching operation according to an embodiment;
FIG. 3 is a diagram illustrating a data flow between transformer layers using input tensor caching according to an embodiment;
FIG. 4 is a diagram illustrating a configuration of a transformer layer according to an embodiment; and
FIG. 5 is a flowchart illustrating an example of an inference method using a generative model according to an embodiment.
FIG. 6 is a flowchart illustrating an example of generating an output token using a generative model according to an embodiment.

DETAILED DESCRIPTION

The present disclosure describes systems and methods for performing inference of a generative model. Embodiments of the present disclosure include a generative model that includes a transformer layer configured to perform an attention mechanism. In some cases, the transformer layer includes a self-attention sub-layer and a multilayer perception (MLP) sub-layer. An embodiment includes an activation sequence caching technique that may be applied to the self-attention sub-layer. In some cases, the activation sequence caching technique may be used for caching sequence of activations that are generated when performing generative inference, thereby enhancing the performance of the process and enabling reduction in memory use.

Existing techniques for caching, such as the key value caching technique, may use a large amount of memory. Additionally, existing techniques result in generation of high communication overhead between processors during the generative inference process. For example, the communication overhead results from transferring a large capacity of cache between processors. As a result, a performance bottleneck may occur due to a low bandwidth in case of the communication overhead.

The present disclosure describes systems and methods for a generative model. Embodiments of the present disclosure include an activation caching technique. In some cases, the activation caching technique, such as the input tensor caching technique may be obtained for an attention mechanism. In some cases, the activation caching technique may be used to cache an input tensor (e.g., without caching a key-value tensor) when performing the attention mechanism in each transformer layer of a generative model.

In some cases, the generative model may be trained for mapping the input and output tensors. The training ability of the model to generate such mappings may refer to a learning ability of the artificial intelligence model. Additionally, in some cases, the trained artificial intelligence model may have generalization capabilities that generate relatively accurate outputs, for example, for untrained input patterns. According to an embodiment, a generative artificial intelligence model may perform high-level inference using an attention mechanism of transformers included in the generative model.

The present disclosure describes an activation sequence caching method for enhancing the performance of the generative inference while reducing memory usage. In some cases, the memory usage may be performed by caching sequence of activations generated when performing the generative inference. Embodiments of the present disclosure include the activation sequence caching technique that reduces cache-related memory usage based on caching the activation sequence. In some cases, the activation sequence caching technique reduces cache-related processor communication. Additionally, the activation sequence caching technique enhances the generative inference performance by minimizing the amount of computation using optimized computation scheduling.

Embodiments of the present disclosure are configured to perform inference of a generative neural network model. In some cases, the generative model comprises a transformer layer configured to generate a first output token by executing the one or more transformer layers by using a first input sequence based on a first input token in a first decoding stage. Additionally, the one or more processors may be configured to generate a second output token by executing the one or more transformer layers by using a second input sequence based on a second input token based on a second input token corresponding to the first output token. As described, the second input sequence may include the first input sequence and a second input tensor of the second decoding stage.

Embodiments of the present disclosure are configured to obtain a first input sequence based on a first input token. In some cases, one or more first processors executing a generative model may be used to generate a first output token. In some cases, the generative model may include one or more transformer layers. According to an embodiment, the first input sequence may be cached in a memory corresponding to one or more second processors other than the one or more first processors. In some cases, a second input sequence is obtained by loading the first input sequence from the memory corresponding to one or more second processors. The one or more first processors executing the generative model may generate a second output token based on the second input sequence.

The following detailed structural or functional description is provided as an example only and various alterations and modifications may be made to the examples. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, or similarly, the second component may be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/including" and/or "includes/including" when used herein, specify the presence of stated features, integers, steps, operations, elements, and/or components, but do not preclude the presence or addition of one or more other features, integers, steps, operations, elements, components and/or groups thereof.

As used herein, "A or B", "at least one of A and B", "at least one of A or B", "A, B or C", "at least one of A, B and C", and "at least one of A, B, or C," may include any one of the items listed together in the corresponding one of the phrases, or all possible combinations thereof.

Unless otherwise defined, all terms, including technical and scientific terms, used herein have the same meaning as commonly understood by one of ordinary skill in the art to which this disclosure pertains. Terms, such as those defined in commonly used dictionaries, should be construed to have meanings matching with contextual meanings in the relevant art, and are not to be construed to have an ideal or excessively formal meaning unless otherwise defined herein.

Hereinafter, the embodiments will be described in detail with reference to the accompanying drawings. When describing the embodiments with reference to the accompanying drawings, like reference numerals refer to like elements and a repeated description related thereto will be omitted.

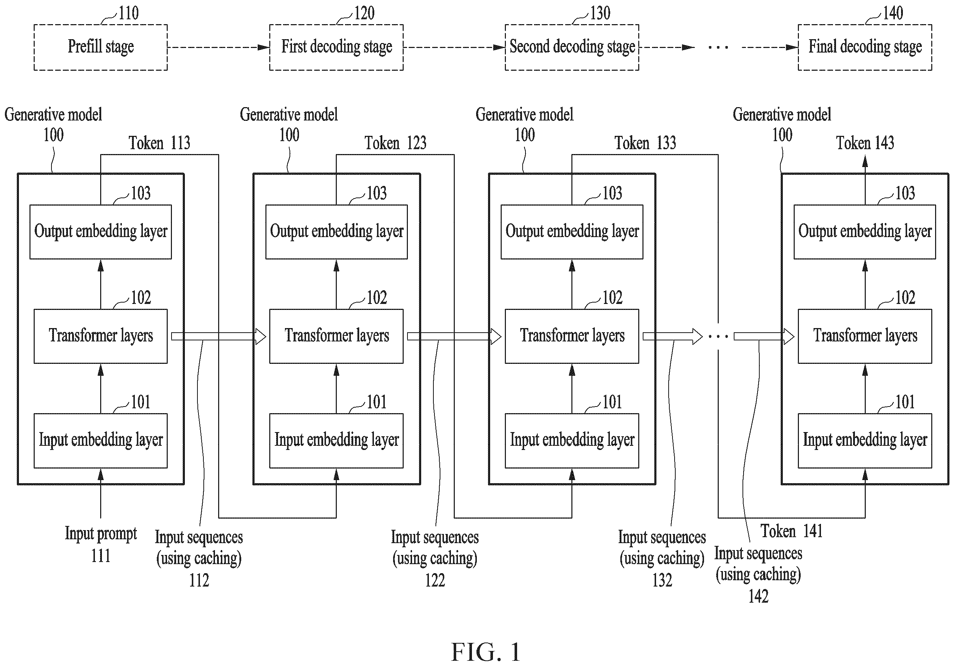

FIG. 1 illustrates an example of an inference operation of a generative model according to an embodiment. In some cases, generative model comprises a machine learning model.

Machine learning parameters, also known as model parameters or weights, are variables that provide a behavior and characteristics of a machine learning model. Machine learning parameters can be learned or estimated from training data and are used to make predictions or perform tasks based on learned patterns and relationships in the data. Machine learning parameters are typically adjusted during a training process to minimize a loss function or maximize a performance metric. The goal of the training process is to find optimal values for the parameters that allow the machine learning model to make accurate predictions or perform well on the given task.

For example, during the training process, an algorithm adjusts machine learning parameters to minimize an error or loss between predicted outputs and actual targets according to optimization techniques like gradient descent, stochastic gradient descent, or other optimization algorithms. Once the machine learning parameters are learned from the training data, the machine learning parameters are used to make predictions on new, unseen data.

Artificial neural networks (ANNs) have numerous parameters, including weights and biases associated with each neuron in the network, that control a degree of connections between neurons and influence the neural network's ability to capture complex patterns in data. An ANN is a hardware component or a software component that includes a number of connected nodes (i.e., artificial neurons) that loosely correspond to the neurons in a human brain. Each connection, or edge, transmits a signal from one node to another (like the physical synapses in a brain). When a node receives a signal, it processes the signal and then transmits the processed signal to other connected nodes.

In some cases, the signals between nodes comprise real numbers, and the output of each node is computed by a function of the sum of its inputs. In some examples, nodes may determine their output using other mathematical algorithms, such as selecting the max from the inputs as the output, or any other suitable algorithm for activating the node. Each node and edge are associated with one or more node weights that determine how the signal is processed and transmitted.

In ANNs, a hidden (or intermediate) layer includes hidden nodes and is located between an input layer and an output layer. Hidden layers perform nonlinear transformations of inputs entered into the network. Each hidden layer is trained to produce a defined output that contributes to a joint output of the output layer of the ANN. Hidden representations are machine-readable data representations of an input that are learned from hidden layers of the ANN and are produced by the output layer. As the understanding of the ANN of the input improves as the ANN is trained, the hidden representation is progressively differentiated from earlier iterations.

During a training process of an ANN, the node weights are adjusted to improve the accuracy of the result (i.e., by minimizing a loss which corresponds in some way to the difference between the current result and the target result). The weight of an edge increases or decreases the strength of the signal transmitted between nodes. In some cases, nodes have a threshold below which a signal is not transmitted at all. In some examples, the nodes are aggregated into layers. Different layers perform different transformations on their inputs. The initial layer is known as the input layer and the last layer is known as the output layer. In some cases, signals traverse certain layers multiple times.

Referring to FIG. 1, a generative model 100 may include a plurality of stages, i.e., prefill stage 110, first decoding stage 120, second decoding stage 130, and final decoding stage 140. Generative model 100 at each of the plurality of stages includes an input embedding layer 101, transformer layers 102, and an output embedding layer 103. The generative model 100 may receive an input prompt 111. In some cases, generative model 100 may generate tokens 113, 123, 133, 141, and 143 corresponding to prefill stage 110, a first decoding stage 120, and a second decoding stage 130 to a final decoding stage 140, respectively. An inference result corresponding to the input prompt 111 may be generated based on the token 143 of the final decoding stage 140.

The input prompt 111 may be data in various formats such as a text, a sound, an image, a video, and the like. For example, the input prompt 111 may be a query or a request of a user, and the inference result may be a response to the query or the request.

The input embedding layer 101 may perform embedding and/or positional encoding for input data. The input data may be the input prompt 111 for the prefill stage 110 or the tokens 113, 123, 133, and 141 for the first to final decoding stages 120 to 140. Thus, the input data of the prefill stage 110 may be the input prompt 111, and the input data of the first decoding stage 120 to the final decoding stage 140 may be the tokens 113, 123, 133, and 141. A format of the input data may be converted into a format processible in the transformer layers 102 according to the embedding of the input data, i.e., embedding of the input data generated using input embedding layer 101. A temporal and/or spatial relationship between elements (e.g., words of a text or tiles of an image) of the input data may be defined through the positional encoding for the input data. For example, the input embedding layer 101 may add positional information to the input data, e.g., input prompt 111.

The transformer layers 102 may perform an attention mechanism. In the machine learning field, an attention mechanism is a method of placing differing levels of importance on different elements of an input. Some sequence models process an input sequence sequentially, maintaining an internal hidden state that captures information from previous steps. However, in some cases, this sequential processing leads to difficulties in capturing long-range dependencies or attending to specific parts of the input sequence.

The attention mechanism addresses these difficulties by enabling an ANN to selectively focus on different parts of an input sequence, assigning varying degrees of importance or attention to each part. The attention mechanism achieves the selective focus by considering a relevance of each input element with respect to a current state of the ANN.

In some cases, an ANN employing an attention mechanism receives an input sequence and maintains its current state, which represents an understanding or context. For each element in the input sequence, the attention mechanism computes an attention score that indicates the importance or relevance of that element given the current state. The attention scores are transformed into attention weights through a normalization process (e.g., applying a softmax function). The attention weights represent the contribution of each input element to the overall attention. The attention weights are used to compute a weighted sum of the input elements, resulting in a context vector. The context vector represents the attended information or the part of the input sequence that the ANN considers most relevant for the current step. The context vector is combined with the current state of the ANN, providing additional information and influencing subsequent predictions or decisions of the ANN.

In some cases, by incorporating an attention mechanism, an ANN dynamically allocates attention to different parts of the input sequence, allowing the ANN to focus on relevant information and capture dependencies across longer distances.

In some cases, calculating attention involves three basic steps. First, a similarity between a query vector Q and a key vector K obtained from the input is computed to generate attention weights. In some cases, similarity functions used for this process include dot product, splice, detector, and the like. Next, a softmax function is used to normalize the attention weights. Finally, the attention weights are weighed together with their corresponding values V In the context of an attention network, the key K and value V are typically vectors or matrices that are used to represent the input data. The key K is used to determine which parts of the input the attention mechanism should focus on, while the value V is used to represent the actual data being processed.

In some cases, an attention mechanism may refer to a self-attention mechanism and/or a cross-attention mechanism. A self-attention mechanism enables a network to weigh input elements selectively (e.g., based on a relevance to other elements), emphasizing important features during computation. The self-attention mechanism incorporates dynamic attention scores, optimizing information processing. Additionally, a cross-attention mechanism facilitates effective interaction between different input sequences in neural network architectures by dynamically assigning attention scores based on their relevance. The cross-attention mechanism enhances model performance by providing for the network to focus on key features from one sequence while processing another, enabling more nuanced and context-aware information processing.

Referring again to FIG. 1, particularly, an input tensor may be input to each of the transformer layers 102. The transformer layers 102 may generate an output tensor by performing the attention mechanism (such as the attention mechanism described herein) for each input tensor. The transformer layers 102 may include a first transformer layer and a second transformer layer. In some cases, when the second transformer layer is subsequent to the first transformer layer in transformer layers 102, an output tensor of the first transformer layer may be an input tensor of the second transformer layer.

As described herein, the transformer layers 102 may each include a query weight, a key weight, and a value weight. The transformer layers 102 may each perform the attention mechanism by applying the query weight, the key weight, and the value weight to the input tensor. An attention result may be generated based on the attention mechanism, and an output tensor may be generated based on the attention result. The number of layers of the transformer layers 102 may be not be limited to any number. An index j may be used to identify a transformer layer from the plurality of transformer layers 102 (i.e., $N$ transformer layers 102).

The output embedding layer 103 may convert the output tensor obtained from the transformer layers 102 into the tokens 113, 123, 133, and 143. The output embedding layer 103 may be considered as an inverse of (e.g., may operate inversely to) the input embedding layer 101. For example, the output embedding layer 103 may perform inverse conversion of the format conversion of the input embedding layer 101 and/or positional information removal.

As shown with reference to FIG. 1, the inference operation may be performed through the prefill stage 110, the first decoding stage 120, and the second decoding stage 130 to the final decoding stage 140 of the generative model 100. The input prompt 111 may include a plurality of tokens. In case of the prefill stage 110, the generative model 100 may analyze a correlation between the tokens of the input prompt 111 based on the attention mechanism (e.g., using transformer layers 102). In the first decoding stage 120 and the second decoding stage 130 to the final decoding stage 140, the generative model 100 may generate the tokens 123, 133, and 143 based on the attention mechanism (e.g., using transformer layers 102 corresponding to each of first decoding stage 120 and the second decoding stage 130 to the final decoding stage 140). The number of decoding stages may not be limited. An index $i$ may be used to identify any of the decoding stage among the plurality of decoding stages 120 to 140 (i.e., among M decoding stages). For example, referring to FIG. 1, the index $i$ of the final decoding stage 140 may be M.

According to an embodiment, input tensor caching may be performed (i.e., instead of key value (KV) caching) when executing the transformer layers 102. As the decoding stage proceeds from first decoding stage 120 to final decoding stage 140, a repeated operation may occur when obtaining a key tensor and a value tensor. The KV caching may be a technique for caching key tensor sequences and value tensor sequences to prevent the repeated operation. The sequence may represent a data format in which tensors are connected to each other (e.g., concatenation). For example, the sequence may be formed by adding a second tensor to a first tensor. Key tensors may form key tensor sequences and value tensors may form value tensor sequences.

Caching may refer to an operation of storing a sequence. When a size of the generative model 100 is large, a memory of a processor that executes the generative model 100 may be used to store the generative model 100, and the sequence may be cached in another storage space, i.e., other than the memory of the processor that executes the generative model 100. For example, the inference operation using the generative model 100 may be performed by an auxiliary processor (e.g., a graphics processing unit (GPU), a neural processing unit (NPU), a tensor processing unit (TPU), an accelerator, or the like), and the sequence may be cached in a memory (e.g., a central processing unit (CPU) memory) or a storage (e.g., a disk) of a main processor (e.g., a CPU) other than in a memory (e.g., a GPU memory, an NPU memory, a TPU memory, an accelerator memory, or the like) of the auxiliary processor.

In some cases, KV caching is effective in reducing the amount of computation but may require an additional storage space to store sequences. Additionally, KV caching may use additional communication as sequences move between a main processor area and an auxiliary processor area. As sizes of key tensor sequences and value tensor sequences increase, resource consumption due to the additional storage space and the additional communication may increase.

Table 1 may show an attention operation using KV caching of a transformer layer.

[Table 1]

| **Prefill Stage** |
|---|
| $x_K = x_{input} \cdot w_K$ <br> $x_V = x_{input} \cdot w_V$ <br> $\vdots$ |
| **Decoding Stage, iᵗʰ Iteration** |
| $t_Q = t^i_{input} \cdot w_Q$ <br> $t_K = t^i_{input} \cdot w_K$ <br> $t_V = t^i_{input} \cdot w_V$ <br> $x_K = concat(x_K^{i-1}, t_K)$ <br> $x_V = concat(x_V^{i-1}, t_V)$ <br> $t_{QK} = t_Q \cdot (x_K)^T$ <br> $t_{f(QK)} = f_{softmax}\left(\dfrac{t_{QK}}{\sqrt{h_1}}\right)$ <br> $t_{f(QK)V} = t_{f(QK)} \cdot x_V$ <br> $t^i_{output} = t_{f(QK)V} \cdot w_O + t^i_{input}$ |

As shown in Table 1, $x_K$ denotes a key tensor sequence, $x_V$ denotes a value tensor sequence, $x_{input}$ denotes an input sequence, $w_K$ denotes a key weight, and $w_V$ denotes a value weight. The key tensor, the value tensor, and the input tensor may be the same as the key tensor sequence, the value tensor sequence, and the input sequence in the prefill stage (since the key tensor, the value tensor, and the input tensor are initially generated in the prefill stage). Referring to Table 1, "... " of the prefill stage may indicate a corresponding operation of a decoding stage of Table 1. For example, $x_{output}$ may be determined through the corresponding operation of the decoding stage. $x_{output}$ denotes an output tensor sequence. A transformer layer may include an attention layer. The input tensor may be an input to the attention layer, and an output tensor may be an output of the attention layer. As described herein, in the prefill stage, the output tensor may be the same as the output tensor sequence.

Referring to Table 1, $t_Q$ denotes a query tensor, $t_K$ denotes a key tensor, $t_V$ denotes a value tensor, $t^i_{input}$ denotes an input tensor of an $i$-th decoding stage, $w_Q$ denotes a query weight, $w_K$ denotes a key weight, and $w_V$ denotes a value weight. Each of the key tensor and the value tensor are generated in a single decoding stage. In some cases, the key tensor sequence and the value tensor sequence may be combined (e.g., concatenated) through a plurality of decoding stages. The query weight, the key weight, the value weight, and the like may be distinguished by transformer layers, however, for convenience of description and ease of understanding, a layer index j is omitted in Table 1. As such, Table 1 may show description for one layer. $t_Q$ corresponds to a product of $t^i_{input}$ and $w_Q$, $t_K$ corresponds to a product of $t^i_{input}$ and $w_K$, and $t_V$ corresponds to a product of $t^i_{input}$ and $w_V$.

Referring again to Table 1, *concat* may denote a combination function (e.g., a concatenation function). For example, combining $x_K^{i-1}$ and $t_K$ using $concat(x_K^{i-1}, t_K)$ generates $x_K$. In some examples, $x_V^{i-1}$ and $t_V$ may be combined using $concat(x_V^{i-1}, t_V)$ and $x_V$ may be generated. $x_K^{i-1}$ may denote a key tensor sequence in a ($i$-1)-th decoding stage (e.g., a previous decoding stage) and $x_V^{i-1}$ may denote a value tensor sequence in the ($i$-1)-th decoding stage.

During the inference process, KV caching on $x_K$ and $x_V$ may be performed. For example, when $x_K$ and $x_V$ are determined in the prefill stage, the KV caching on $x_K$ and $x_V$ may be performed. The prefill stage may correspond to a decoding stage when $i = 0$. $x_K$ and $x_V$ cached in the prefill stage may be loaded as $x_K^{i-1}$ and $x_V^{i-1}$ in a first decoding stage. In the first decoding stage, $x_K$ and $x_V$ may be updated through $concat\left(x_K^{i-1}, t_K\right)$ and $concat\left(x_V^{i-1}, t_V\right)$, and the KV caching on the updated $x_K$ and $x_V$ may be performed.

In Table 1, $t_{QK}$ may correspond to a result obtained by multiplying $t_Q$ by a transposed result of $x_K$. $t_{QK}$ may be referred to as a query-key tensor. A non-linear operation of $t_{QK}$ may be performed. $f_{softmax}$ may denote a non-linear operation (e.g., softmax operation). $t_{QK}$ may be divided by a square root of $h_1$ and followed by performing the non-linearization operation (e.g., softmax). $h_1$ may denote a size of a hidden dimension of an attention layer. $t_{f(QK)}$ may denote the non-linear-operation of $t_{QK}$. $t_{f(QK)V}$ may correspond to a result obtained by multiplying $t_{f(QK)}$ by $x_V$. $t_{f(QK)V}$ may be referred to as an attention result.

In Table 1, $t_{output}^i$ may be determined based on $t_{f(QK)V}$. For example, $t_{output}^i$ may be determined by adding $t_{input}^i$ to a product of $t_{f(QK)V}$ and $w_0$. $w_0$ may be an output adjustment weight. $t_{output}^i$ may denote an output tensor. The query weight, the key weight, the value weight, and the like may be distinguished by transformer layers, however, for convenience of description and ease of understanding, a layer index j is omitted in Table 1. As such, Table 1 may show description for one layer.

According to an embodiment, input tensor caching may refer to a technique for caching input sequences, instead of key tensor sequences and value tensor sequences. Referring again to FIG. 1, a caching operation of input sequences 112, 122, 132, and 142 may be performed. For example, the input sequences 112 generated by the transformer layers 102 in the prefill stage 110 may be cached in a memory or a stage of a main processor, and then loaded in an auxiliary processor or an auxiliary processor memory when needed for the transformer layers 102 in the first decoding stage 120. The input sequences 112, 122, 132, and 142 may be referred to as input tensor sequences. The transformer layers 102 may determine the input sequences 122 by adding input tensors based on the token 113 to the input sequences 112, generate output tensors using the input sequences 122, and cache the input sequences 122.

Table 2 shows an attention operation using input tensor caching of a transformer layer.

[Table 2]

| Decoding Stage, $i^{th}$ Iteration |
|---|
| $x_{input}^i = concat\left(x_{input}^{i-1}, t_{input}^i\right)$ |
| $t_Q = t_{input}^i \cdot w_Q$ |
| $x_K = x_{input}^i \cdot w_K$ |
| $x_V = x_{input}^i \cdot w_V$ |
| $t_{QK} = t_Q \cdot (x_K)^T$ |
| $t_{f(QK)} = f_{softmax}\left(\dfrac{t_{QK}}{\sqrt{h_1}}\right)$ |
| $t_{f(QK)V} = t_{f(QK)} \cdot x_V$ |
| $t_{output}^i = t_{f(QK)V} \cdot w_0 + t_{input}^i$ |

In case of the input tensor caching, input sequences may be cached instead of key tensor sequences and value tensor sequences. Referring to Table 2, $x_{input}^i$ may denote an input sequence in an $i$-th decoding stage. $x_{input}^{i-1}$ and $t_{input}^i$ may be combined using $concat\left(x_{input}^{i-1}, t_{input}^i\right)$ to determine $x_{input}^i$. $x_{input}^{i-1}$ may denote an input sequence in a ($i$-1)-th decoding stage (e.g., a previous decoding stage), and $t^i_{input}$ may denote an input tensor in the $i$-th decoding stage (e.g., a current decoding stage). Due to the difference, $x_K$ and $x_V$ may be determined based on $x^i_{input} \cdot w_K$ and $x^i_{input} \cdot w_V$ (i.e., instead of $concat(x^{i-1}_K, t_K)$ and $concat(x^{i-1}_V, t_V)$).

In some cases, the input tensor caching may use a larger amount of computation than the KV caching. In some cases, using the input tensor caching may be advantageous from a viewpoint of memory usage and a communication amount. For example, the memory usage and the communication amount may be reduced by 50%, however, embodiments may not be limited thereto, and a reduction in memory usage and communication amount may be greater than or less than 50%. In some cases, when the operation order of the input tensor caching is adjusted, the increasing amount of computation may be significantly reduced compared to the KV caching. For example, the amount of computation may be reduced by 98.8%, however, embodiments may not be limited thereto, and the reduction in computation may vary.

For example, the operation order of the input tensor caching may be adjusted. In some examples, the operation order may be performed as Equation 2 and 3 instead of Equation 1 and Equation 3.

[Equation 1]

$$t_{QK} = (t^i_{input} \cdot w_Q) \cdot \left(x^i_{input} \cdot w_K\right)^T$$

[Equation 2]

$$t_{QK} = \left(\left(\left(t^i_{input} \cdot w_Q\right) \cdot (w_K)^T\right) \cdot \left(x^i_{input}\right)^T\right)$$

Referring to Table 2, $t_{QK}$ may be obtained by multiplying $t_Q$ by a transposed result of $x_K$ (as shown in Equation 1). When the operation order of Equation 1 is adjusted to Equation 2, the amount of computation may be significantly reduced.

Referring to Equation 2, a first intermediate computational result may be determined by multiplying $t^i_{input}$ by $w_Q$ a second intermediate computational result may be determined by multiplying the first intermediate computational result by a transposed result of $w_K$, and $t_{QK}$ may be determined by multiplying the second intermediate computational result by a transposed result of $x^i_{input}$.

[Equation 3]

$$t_{f(QK)V} = t_{f(QK)} \cdot \left(x^i_{input} \cdot w_V\right)$$

[Equation 4]

$$t_{f(QK)V} = \left(t_{f(QK)} \cdot x^i_{input}\right) \cdot w_V\right)$$

Referring again to Table 2, $t_{f(QK)V}$ may be obtained by multiplying $t_{f(QK)}$ by $x_V$ (as represented by Equation 3). When the operation order of Equation 3 is adjusted as in Equation 4, the amount of computation may be significantly reduced. According to Equation 4, a third intermediate computational result may be determined by multiplying $t_{f(QK)}$ by $x^i_{input}$, and $t_{f(QK)V}$ may be determined by multiplying the third intermediate computational result by $w_V$.

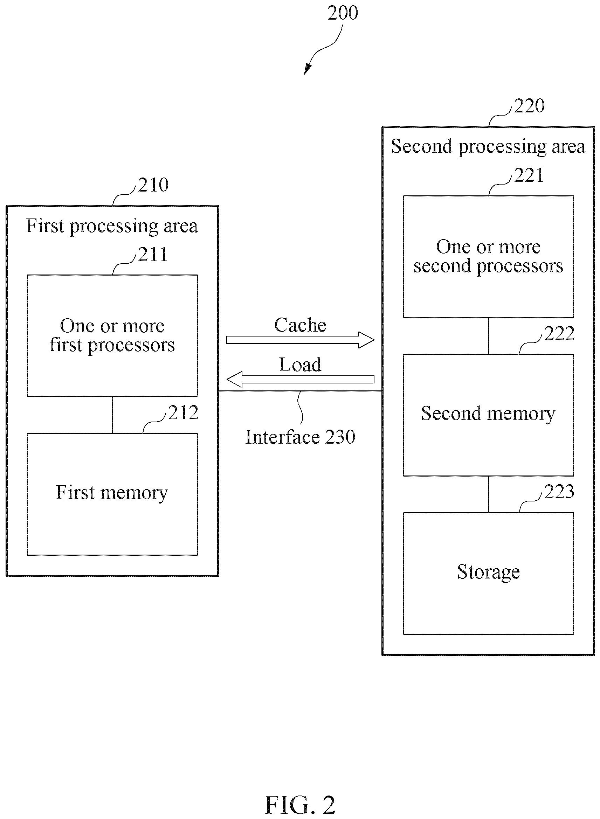

FIG. 2 illustrates an example of a data caching operation according to an embodiment. Referring to FIG. 2, an electronic device 200 may include a first processing area 210 and a second processing area 220. The first processing area 210 may include one or more first processors 211, and a first memory 212 of the one or more first processors 211. The second processing area 220 may include one or more second processors 221, a second memory 222 of the one or more second processors 221, and a storage 223.

A processor is an intelligent hardware device, such as a general-purpose processing component, a digital signal processor (DSP), a central processing unit (CPU), a graphics processing unit (GPU), a microcontroller, an application specific integrated circuit (ASIC), a field programmable gate array (FPGA), a programmable logic device, a discrete gate or transistor logic component, a discrete hardware component, or any combination thereof.

In some cases, processor is configured to operate a memory array using a memory controller. In other cases, a memory controller is integrated into processor. In some cases, processor is configured to execute computer-readable instructions stored in memory to perform various functions. In some aspects, processor includes special purpose components for modem processing, baseband processing, digital signal processing, or transmission processing.

Memory includes one or more memory devices. Examples of a memory device include random access memory (RAM), read-only memory (ROM), or a hard disk. Examples of memory devices include solid state memory and a hard disk drive. In some examples, memory is used to store computer-readable, computer-executable software including instructions that, when executed, cause at least one processor of processor to perform various functions described herein.

In some cases, memory includes a basic input/output system (BIOS) that controls basic hardware or software operations, such as an interaction with peripheral components or devices. In some cases, memory includes a memory controller that operates memory cells of memory. For example, the memory controller may include a row decoder, column decoder, or both. In some cases, memory cells within memory store information in the form of a logical state.

According to an example embodiment, the one or more first processors 211 may include a GPU, an NPU, a TPU, an accelerator, or a combination thereof, however, embodiments are not limited thereto. The one or more first processors 211 may execute a generative model. For example, the one or more first processors 211 may perform operations related to inference of the generative model.

The second processing area 220 may include one or more second processors 221, a second memory 222, and a storage 223 of the one or more second processors 221. The one or more second processors 221 may be distinguished from the one or more first processors 211. The second memory 222 and the storage 223 may be distinguished from the first memory 212. For example, the one or more second processors 221 may include a CPU, however, embodiments are not limited thereto.

The first processing area 210 and the second processing area 220 may be connected via an interface 230. The interface 230 may include, for example, a bus, however, embodiments are not limited thereto. Compared to internal data transmission of the first processing area 210 and the second processing area 220, external data transmission between the first processing area 210 and the second processing area 220 may consume larger cost in terms of time and energy. When the size of the generative model is large, the first memory 212 may be used to store the generative model and the second memory 222 or the storage 223 may be used for data caching.

For example, the generative model may be executed by the one or more first processors 211. In some examples, input sequences generated during the process of executing the generative model may be cached in the second memory 222 or the storage 223 through the interface 230. For example, first input sequences generated in the first decoding stage and second input sequences generated in the second decoding stage may be cached in the second memory 222 or the storge 223. In some cases, the input sequences may be stored in the second memory 222 through the first memory 212. In some cases, the input sequences may be stored in the second memory 222 without going through the first memory 212. In some cases, the input sequences may be stored in the storage 223 through the first memory 212 and the second memory 222. In some cases, the input sequences may be stored in the storage 223 without going through the first memory 212 and/or the second memory 222.

In some cases, the input sequences may be loaded to the first processing area 210 during a decoding stage. For example, the first input sequences and the second input sequences may be loaded from the second memory 222 or the storage 223 to the one or more first processors 211 or the first memory 212. For example, the second input sequences may be generated by adding second input tensors to first input tensors loaded in the first memory during the second decoding stage.

The electronic device 200 may be embodied as at least a portion of a mobile device (e.g., a mobile phone, a smartphone, a personal digital assistant (PDA), a netbook, a tablet computer, a laptop computer, etc.), a wearable device (e.g., a smartwatch, a smart band, smart eyeglasses, etc.), a computing device (e.g., a desktop, a server (e.g., a cloud server or a data center server), etc.), a home appliance (e.g., a television (TV), a smart TV, a refrigerator, etc.), a security device (e.g., a door lock, etc.), or a vehicle (e.g., an autonomous vehicle, a smart vehicle, etc.).

The first memory 212 may store a generative model including transformer layers. The one or more first processors 211 may generate a first output token by executing the transformer layers using the first input sequences based on a first input token in the first decoding stage of the generative model. Additionally, the one or more first processors 211 may generate a second output token by executing the transformer layers using the second input sequences. In some cases, the second input sequences may be based on a second input token corresponding to the first output token in the second decoding stage of the generative model. As described with reference to FIG. 1, the second input sequences may be determined by adding the second input tensors of the second decoding stage to the first input sequences.

The first memory 212 may be a high bandwidth memory (HBM) and/or a compute express link (CXL) memory. The first memory 212 may have a hierarchical memory structure. The first memory 212 may accelerate operations using the hierarchical memory structure. For example, the first memory 212 may provide a computational function such as processing-in-memory (PIM) or a processing-near-memory (PNM). For example, the fist memory 212 may include a HBM-PIM, HBM-PNM, CXL-PIM memory, CXL-PNM, or a combination thereof. The PIM or the PNM may accelerate operations through internal logic.

Processing-In-Memory (PIM) is an advanced computing architecture that integrates processing capabilities directly within the memory chips. The PIM mitigates the memory bottleneck issue in conventional computing systems, where the data transfer between the processor and memory can become a significant performance limiter. By embedding processing units within the memory, PIM enables data to be processed directly where it is stored, thereby reducing latency and energy consumption associated with data movement. The PIM architecture is used for data-intensive applications such as artificial intelligence, machine learning, big data analytics, and scientific simulations. PIM can perform operations like data filtering, aggregation, and even complex computations, which can significantly accelerate overall system performance. Moreover, PIM enhances the efficiency of memory usage and improves the scalability of high-performance computing systems by alleviating the von Neumann bottleneck.

Processing-Near-Memory (PNM) is a computing paradigm that involves placing processing units in close proximity to memory modules rather than integrating them directly within the memory chips. PNM similar to PIM, reduces the latency and energy costs associated with data transfer between the processor and memory. By situating the processing units near the memory, PNM architectures can leverage shorter data paths and higher bandwidth connections, thus enhancing computational efficiency. The PNM architecture is advantageous for applications requiring high-speed data access and processing, such as real-time data analytics, edge computing, and complex simulations. PNM can provide a flexible and scalable solution, as it provides for a modular approach to enhancing computational power by adding more processing units near memory as needed. PNM provides substantial improvements in performance and energy efficiency over traditional memory architectures.

According to an embodiment, the first memory 212 may process operations of input tensor caching using the PIM or the PNM. In a case of the KV caching, an output tensor of a previous transformer layer (i.e., an input tensor of a current transformer layer) may be multiplied by a key weight and a value weight, respectively, to determine a key tensor and a value tensor. In some cases, the key tensor and the value tensor may be connected (e.g., concatenated) with a key tensor sequence and a value tensor sequence of the previous decoding stage (or the prefill stage) to determine a key tensor sequence of a current decoding stage and a value tensor sequence of the current decoding stage. Additionally, the key tensor sequence of the current decoding stage and the value tensor sequence of the current decoding stage may be cached.

In a case of the input tensor caching, an input sequence of a previous decoding stage may be connected to an output tensor of a previous transformer layer to determine an input sequence of a current decoding stage. Additionally, the input sequence of the current decoding stage may be multiplied by a key weight and a value weight, respectively, to determine a key tensor sequence and a value tensor sequence. By implementing the characteristics of the input tensor caching, the connection operation (e.g., the concatenation operation) may be offloaded in the PIM or PNM which increases operation efficiency.

For example, the connection operation for the input sequence of the previous decoding stage and the output tensor of the previous transformer layer may be efficiently processed based on the PIM or the PNM. In some cases, the one or more first processors 211 may not necessarily process the connection operation by loading the input sequence of the previous decoding stage and the output tensor of the previous transformer layer to an operation space of the first processors 211. In some cases, an input sequence of a current decoding stage corresponding to a result of the connection operation in the first memory 212 may be loaded to the one or more first processors 211. Therefore, a bandwidth and computational overhead may be offloaded efficiently.

An embodiment of the present disclosure includes an instruction or an operation for performing concatenation. In some cases, the concatenation may be performed while storing the output tensor in a memory area of the first memory 212 that stores the input sequence of the previous decoding stage. In some cases, an instruction or an operation may be defined for concatenation of the input sequence with the input tensor while loading the input sequence in the memory area of the first memory 212. For example, the instruction may be configured to include information about the input/output tensor and the input sequence.

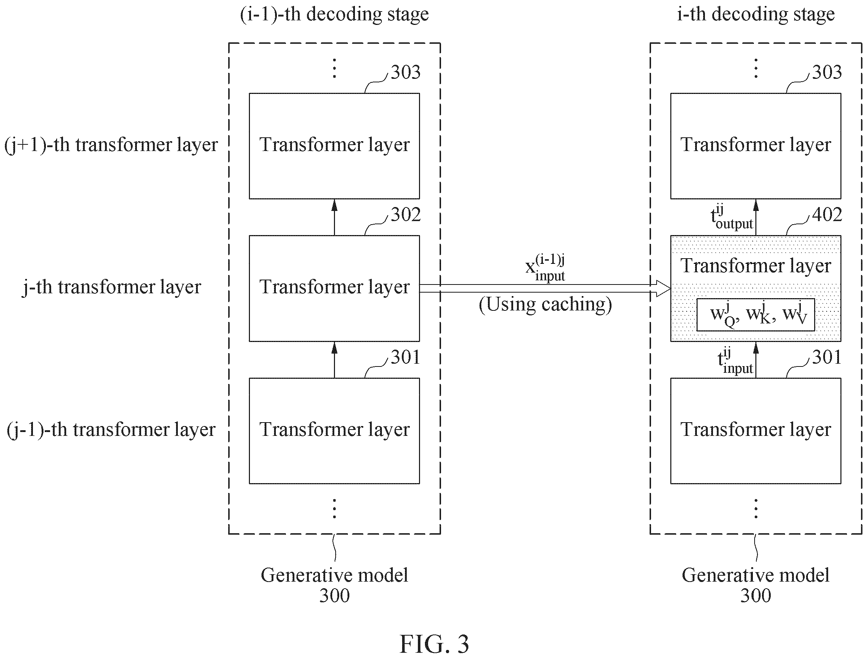

FIG. 3 illustrates a data flow between transformer layers using input tensor caching, according to an embodiment. Referring to FIG. 3, a (i-1)-th decoding stage of a generative model 300 is shown. In case of the (i-1)-th decoding stage, a (i-1)-th output token may be generated by executing transformer layers 301, 302, and 303 using (i-1)-th input sequences based on a (i-1)-th input token. Similarly, in case of an i-th decoding stage of the generative model 300, an i-th output token may be generated by executing the transformer layers 301 to 303 using i-th input sequences based on an i-th input token corresponding to the ($i$-1)-th output token.

The input sequence may be determined for each of the transformer layers 301 to 303. The input sequences may be a set of input tensors and the input tensor may be input data of the transformer layers 301 to 303. The number of input sequences in each decoding stage may be the same as the number of transformer layers of the generative model 300. For example, when the number of transformer layers is $N$, the number of input sequences may be $N$ in each decoding stage. In some cases, input sequences may be determined based on the input token since an input tensor of a first transformer layer may be based on an input token and input tensors of remaining transformer layers may be determined based on an output tensor of the first transformer layer.

The $i$-th input sequences may be determined by adding the $i$-th input tensors of the $i$-th decoding stage to the ($i$-1)-th input sequences. For example, an $i$-th input sequence of a $j$-th transformer layer may be determined by adding an $i$-th input tensor of the $j$-th transformer layer to a ($i$-1)-th input sequence of the $j$-th transformer.

A data flow regarding a transformer layer 402 of the $i$-th decoding stage in FIG. 3 will be described in more detail. The transformer layer 402 may correspond to the $j$-th transformer layer, and a $j$-th output tensor may be output based on the $j$-th input tensor. Referring to FIG. 3, $x_{input}^{(i-1)j}$ may denote the ($i$-1)-th input sequence of the $j$-th transformer layer, $t_{input}^{ij}$ may denote the $i$-th input tensor of the $j$-th transformer layer, and $t_{output}^{ij}$ may denote the $i$-th output tensor of the j-th transformer layer. $w_Q^j$ may denote a query weight of the $j$-th transformer layer, $w_K^j$ may denote a key weight of the $j$-th transformer layer, and $w_V^j$ may denote a value weight of the $j$-th transformer layer. The $i$-th input sequence of the $j$-th transformer may be denoted as $x_{input}^{ij}$. In some cases, the input tensor caching may be applied to $x_{input}^{(i-1)j}$ and $x_{input}^{ij}$.

More specifically, in case of the $i$-th decoding stage, the generative model 300 may determine the $i$-th input sequence for the $j$-th transformer layer among the $i$-th input sequences. In some cases, the generative model 300 may determine the $i$-th input sequence by adding the $i$-th input tensor for the $j$-th transformer layer among the $i$-th input tensors to the ($i$-1)-th input sequence for the $j$-th transformer layer among the ($i$-1)-th input sequences.

The generative model 300 may determine a query-key tensor corresponding to a result obtained by multiplying a query tensor by a transposed result of an $i$-th key tensor sequence. Additionally, generative model 300 may determine an attention result corresponding to a product of a query-key tensor and a first value tensor sequence. In some cases, the attention result may be obtained based on multiplying a non-linear computational result of the query-key tensor by a first value tensor sequence. In some cases, the query tensor may correspond to a result obtained by multiplying the $j$-th query weight of the $j$-th transformer layer by the $i$-th input tensor. The $i$-th key tensor sequence may be obtained by multiplying a $j$-th key weight of the $j$-th transformer layer by the $i$-th input sequence of the $j$-th transformer layer. An $i$-th value tensor sequence may be obtained by multiplying a $j$-th value weight of the $j$-th transformer layer by the $i$-th input sequence of the $j$-th transformer layer.

The generative model 300 may determine a first intermediate computational result by multiplying the $i$-th input tensor of the $j$-th transformer layer by the $j$-th query weight of the $j$-th transformer layer. Additionally, generative model 300 may determine a second intermediate computational result by multiplying the first intermediate computational result by a transposed result of the $j$-th key weight of the $j$-th transformer layer. In some cases, generative model 300 may determine a query-key tensor by multiplying the second intermediate computational result by a transposed result of the $i$-th input sequence of the $j$-th transformer layer. The generative model 300 may determine a third intermediate computational result by multiplying a non-linear computational result of the query-key tensor by the $i$-th input sequence. Additionally, generative model 300 may determine an attention result by multiplying the third intermediate computational result by the $j$-th value weight.

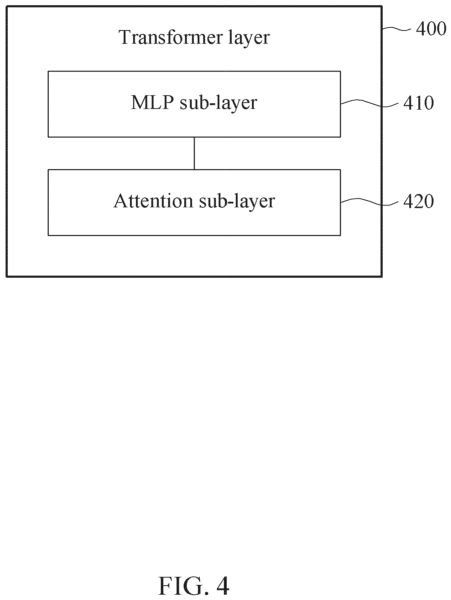

FIG. 4 illustrates a configuration of a transformer layer according to an embodiment. Transformer layers (e.g., transformer layers 102 of FIG. 1 and/ or transformer layers 301 to 303 of FIG. 3) of a generative model may be configured as a transformer layer 400 in FIG. 4. Referring to FIG. 4, the transformer layer 400 may include a multi-layer perceptron (MLP) sub-layer 410 and an attention sub-layer 420. However, the configuration of the transformer layer 400 is not limited thereto. The attention mechanism of the transformer layer 400 may be performed in the attention sub-layer 420. An operation of the transformer layer 400 described with reference to FIGS. 1 to 3, 5, and 6 may be an operation of the attention sub-layer 420. However, embodiments are not limited thereto.

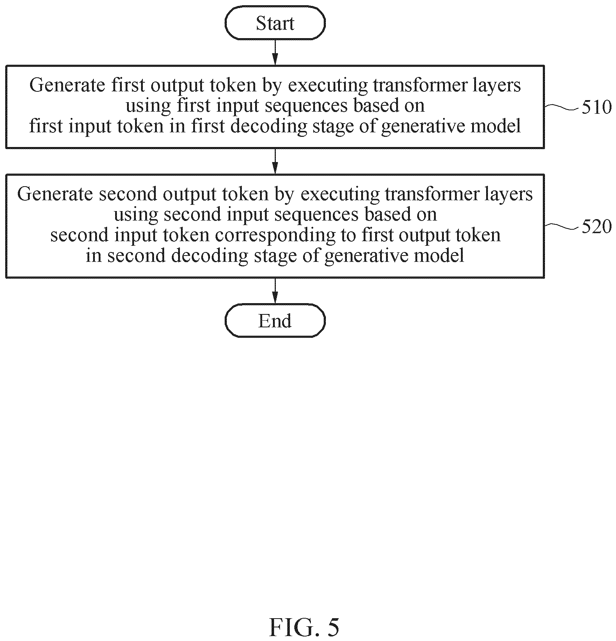

FIG. 5 is a flowchart illustrating an example of an inference method using a generative model according to an embodiment of the present disclosure. One or more first processors (such as first processors 211 described with reference to FIG. 2) may perform inference for an input prompt using the generative model that includes transformer layers.

Referring to FIG. 5, in operation 510, the one or more first processors may generate a first output token by executing the transformer layers using first input sequences based on a first input token in a first decoding stage of the generative model.

In operation 520, the one or more first processors may generate a second output token by executing the transformer layers using second input sequences based on a second input token corresponding to the first output token in a second decoding stage of the generative model. As described with reference to FIGs. 1 and 3, the second input sequences may be determined by adding second input tensors in the second decoding stage to the first input sequences.

The first input sequences and the second input sequences may be cached in a second memory or a storage of one or more second processors. The one or more second processors may be distinguished from the one or more first processors, and the second memory and the storage of the one or more second processors may be distinguished from a first memory of the one or more first processors.

For example, the one or more first processors may include a GPU, an NPU, a TPU, an accelerator, or a combination thereof, and the one or more second processors may include a CPU.

The first memory may be configured to provide a computational function such as PIM and/or PNM, and the second input sequences may be determined by adding the second input tensors in the second decoding stage to the first input sequences by using the PIM and/or the PNM.

The one or more first processors may be configured to cache the first input sequences in a second memory or a storage of one or more second processors which are different from the one or more first processors. In some cases, the one or more first processors may be configured to load the first input sequences in the one or more first processors or a first memory of the one or more first processors from the second memory or the storage. The one or more first processors may be configured to add the second input tensors to the first input sequences loaded in the one or more first processors or the first memory of the one or more first processors to determine the second input sequences.

Additionally, to generate a second output token, the one or more first processors may be configured to determine a second input sequence for a first transformer layer of the transformer layers among the second input sequences by adding a second input tensor for the first transformer layer among the second input tensors to a first input sequence for the first transformer layer among the first input sequences.

In some cases, to generate the second output token, the one or more first processors may be configured to determine a query-key tensor corresponding to a product of a query tensor and a transposed result of a first key tensor sequence. Additionally, the one or more first processors may be configured to determine an attention result corresponding to a product of a non-linear computational result of the query-key tensor and a first value tensor sequence. The query tensor may correspond to a product of a first query weight of the first transformer layer and the second input tensor. The first key tensor sequence may correspond to a product of a first key weight of the first transformer layer and the second input sequence. The first value tensor sequence may correspond to a product of a first value weight of the first transformer layer and the second input sequence.

The one or more first processors may be configured to determine a first intermediate computational result by multiplying the second input tensor by the first query weight. In some cases, the one or more first processors may be configured to determine a second intermediate computational result by multiplying the first intermediate computational result by a transposed result of the first key weight. Additionally, the one or more first processors may be configured to determine the query-key tensor by multiplying the second intermediate computational result by a transposed result of the second input sequence.

The one or more first processors may be configured to determine a third intermediate computational result by multiplying the non-linear computational result of the query-key tensor by the second input sequence. In some cases, the one or more first processors may be configured to determine the attention result by multiplying the third intermediate computational result by the first value weight.

The one or more first processors may be configured to generate the first input token based on an input prompt in a prefill stage of the generative model. In some cases, the one or more first processors may be configured to generate an inference result corresponding to the input prompt based on the second output token when a final decoding stage of the generative model is terminated.

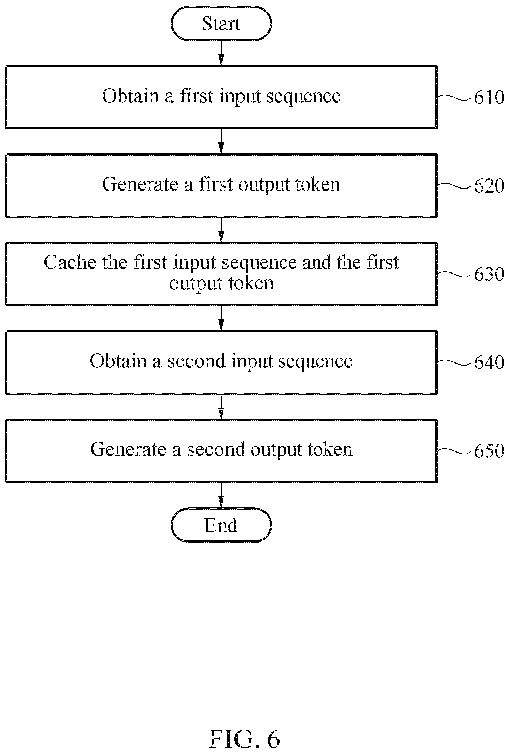

FIG. 6 is a flowchart illustrating an example of an inference method using a generative model according to an embodiment of the present disclosure. One or more first processors (such as first processors 211 described with reference to FIG. 2) may generate a second output token based on an input sequence. Further details regarding each of the operations 610 to 650 have been provided with reference to FIGs. 1-4.

At operation 610, the system obtains a first input sequence. In some cases, the first input sequence comprises a first input token. In some cases, the operations of this step may be performed by the one or more processors that execute a generative model including one or more transformer layers. In some cases, the input sequence may be determined based on an input tensor of the transformer layer and the input sequence for the transformer layer for the previous input sequences. In some examples, the first input sequence may be determined by adding a first input tensor of the transformer layer of a first decoding stage to the input sequence for the transformer layer generated in a prefill stage. For example, the input sequence in the prefill stage may be an input prompt.

At operation 620, the system is configured to generate a first output token. In some cases, the operations of this step are performed by the one or more first processors that execute the generative model. In some cases, the one or more first processors may generate a first output token by executing the transformer layers using first input sequences based on a first input token in the first decoding stage of the generative model.

At operation 630, the system is configured to cache the first input sequence and the first output token. In some cases, the caching is performed in a memory corresponding to one or more second processors other than the one or more first processors. In some cases, the input sequence and the output token may be cached in another storage space, i.e., other than the memory of the processor that executes the generative model.

At operation 640, the system is configured to obtain a second input sequence. In some cases, the second input sequence is obtained based on loading the first input sequence and the first output token from the memory corresponding to one or more second processors.

In some cases, the input sequence may be determined based on an input tensor of the transformer layer and the input sequence for the transformer layer from the previous decoding stage (i.e., the previous input sequences). In some examples, the second input sequence may be determined by adding a second input tensor of the transformer layer of a second decoding stage to the input sequence for the transformer layer generated in a first decoding stage, such as the input sequence in the first decoding stage obtained in operation 610.

At operation 650, the system is configured to generate a second output token. In some cases, the operation of this step are performed by the one or more first processors executing the generative model. In some cases, the second output token is generated based on the second input sequence. In some cases, the one or more first processors may generate a second output token by executing the transformer layers using second input sequences based on a second input token in the second decoding stage of the generative model.

The embodiments described herein may be implemented using a hardware component, a software component, and/or a combination thereof. A processing device may be implemented using one or more general-purpose or special-purpose computers, such as, for example, a processor, a controller, an arithmetic logic unit (ALU), a digital signal processor (DSP), a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and/or data may be stored in any type of machine, component, physical or virtual equipment, computer storage medium or device capable of providing instructions or data to or being interpreted by the processing device. The software may also be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, a person skilled in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents of the claims are within the scope of the following claims.

**Claims**

1.  A method performed by one or more first processors using a generative model comprising one or more transformer layers, the method comprising:

    generating, by the one or more first processors executing the one or more transformer layers in a first decoding stage, a first output token by using a first input sequence based on a first input token; and
    generating, by the one or more first processors executing the one or more transformer layers in a second decoding stage, a second output token by using a second input sequence based on a second input token corresponding to the first output token,
    wherein the second input sequence includes the first input sequence and a second input tensor of the second decoding stage.

2.  The method of claim 1, further comprising:

    caching the first input sequence during the first decoding stage; and
    retrieving the cached first input sequence during the second decoding stage to obtain the second input sequence.

3.  The method of claim 1 or 2, wherein:

    the one or more first processors comprise a graphics processing unit (GPU), a neural processing unit (NPU), a tensor processing unit (TPU), an accelerator, or a combination thereof, and
    the first input sequence is cached in a memory corresponding to one or more second processors comprising a central processing unit (CPU).

4.  The method of one of claims 1 to 3, wherein:
    the second input sequence is generated using a processing-in-memory (PIM), processing-near-memory (PNM), or a combination thereof.

5.  The method of one of claims 1 to 4, further comprising:

    caching the first input sequence in a memory of a second processor different from the one or more first processors;
    loading the first input sequence in a first memory of the one or more first processors; and
    generating the second input sequence based on the first input sequence and the second input tensor.

6.  The method of one of claims 1 to 5, wherein the generating of the second output token further comprises appending the second input tensor to the first input sequence.

7.  The method of one of claims 1 to 6, wherein the generating of the second output token further comprises:

    determining a query tensor corresponding to a product of the second input sequence and a first query weight;
    determining a key tensor sequence corresponding to a product of a first key weight and the second input sequence;
    determining a value tensor sequence corresponding to a product of a first value weight and the second input sequence;
    determining a query-key tensor corresponding to a product of the query tensor and a transpose of the first key tensor sequence; and
    determining an attention result corresponding to a product of a non-linear computational result of the query-key tensor and the first value tensor sequence.

8.  The method of claim 7, wherein the determining of the query-key tensor further comprises:

determining a first intermediate computational result by multiplying the second input sequence by the first query weight;

determining a second intermediate computational result by multiplying the first intermediate computational result by a transpose of the first key weight; and

determining the query-key tensor by multiplying the second intermediate computational result by a transpose of the second input sequence.

9. The method of claim 7 or 8, wherein the determining of the attention result comprises:

determining a third intermediate computational result by multiplying the non-linear computational result of the query-key tensor by the second input sequence; and

determining the attention result by multiplying the third intermediate computational result by the first value weight.

10. The method of one of claims 1 to 9, further comprising:

generating the first input token based on an input prompt in a prefill stage; and

generating an inference result corresponding to the input prompt based on the second output token at a final decoding stage.

11. A non-transitory computer-readable storage medium storing instructions that, when executed by a processor, cause the processor to perform the method of one of claims 1 to 10.

12. An electronic device comprising:

a first memory configured to store parameters of a generative model comprising one or more transformer layers; and

one or more first processors configured to generate a first output token by executing the one or more transformer layers by using a first input sequence based on a first input token in a first decoding stage, and to generate a second output token by executing the one or more transformer layers by using a second input sequence based on a second input token based on a second input token corresponding to the first output token,

wherein the second input sequence includes the first input sequence and a second input tensor of the second decoding stage.

13. The electronic device of claim 12, further comprising:

caching the first input sequence during the first decoding stage; and

retrieving the cached first input sequence during the second decoding stage to obtain the second input sequence.

14. The electronic device of claim 12 or 13, wherein

the one or more first processors comprise a graphics processing unit (GPU), a neural processing unit (NPU), a tensor processing unit (TPU), an accelerator, or a combination thereof, and

the first input sequence is cached in a memory corresponding to one or more second processors comprising a central processing unit (CPU).

15. The electronic device of one of claims 12 to 14, further arranged to perform the method of one of claims 4 to 10.

FIG. 1

200

220

Second processing area

221

One or more
second processors

210

First processing area

211

One or more
first processors

Cache

Load

212

First memory

Interface 230

222

Second memory

223

Storage

FIG. 2

(i-1)-th decoding stage

303 — Transformer layer

402 — Transformer layer $w_Q^j$, $w_k^j$, $w_v^j$ — $t_{output}^{ij}$ / $t_{input}^{ij}$ — 301

Transformer layer

Generative model 300

$x_{input}^{(i-1)j}$ (Using caching)

(i-1)-th decoding stage

303 — Transformer layer

302 — Transformer layer

301 — Transformer layer

Generative model 300

(j+1)-th transformer layer

j-th transformer layer

(j-1)-th transformer layer

FIG. 3

Transformer layer — 400

MLP sub-layer — 410

Attention sub-layer — 420

FIG. 4

```
           ( Start )
              │
              ▼
┌────────────────────────────────────────────────────┐
│  Generate first output token by executing transformer layers  │
│          using first input sequences based on           │ ~510
│  first input token in first decoding stage of generative model │
└────────────────────────────────────────────────────┘
              │
              ▼
┌────────────────────────────────────────────────────┐
│ Generate second output token by executing transformer layers │
│          using second input sequences based on          │
│     second input token corresponding to first output token    │ ~520
│       in second decoding stage of generative model        │
└────────────────────────────────────────────────────┘
              │
              ▼
           ( End )
```

FIG. 5

```
                          ┌─────────┐
                          │  Start  │
                          └────┬────┘
                               │
                               ▼
          ┌──────────────────────────────────────────┐
          │        Obtain a first input sequence      │───610
          └──────────────────────┬───────────────────┘
                                  │
                                  ▼
          ┌──────────────────────────────────────────┐
          │        Generate a first output token      │───620
          └──────────────────────┬───────────────────┘
                                  │
                                  ▼
          ┌──────────────────────────────────────────┐
          │  Cache the first input sequence and the   │
          │              first output token           │───630
          └──────────────────────┬───────────────────┘
                                  │
                                  ▼
          ┌──────────────────────────────────────────┐
          │        Obtain a second input sequence     │───640
          └──────────────────────┬───────────────────┘
                                  │
                                  ▼
          ┌──────────────────────────────────────────┐
          │       Generate a second output token      │───650
          └──────────────────────┬───────────────────┘
                                  │
                                  ▼
                          ┌─────────┐
                          │   End   │
                          └─────────┘
```

FIG. 6

Europäisches
Patentamt

European
Patent Office

Office européen
des brevets

# EUROPEAN SEARCH REPORT

**Application Number**

EP 25 15 2292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHIWEI WANG ET AL: "R-Transformer: Recurrent Neural Network Enhanced Transformer", ARXIV.ORG, CORNELL UNIVERSITY LIBRARY, 201 OLIN LIBRARY CORNELL UNIVERSITY ITHACA, NY 14853, 12 July 2019 (2019-07-12), XP081441201, * page 3, lines 5-29 * * page 4, line 12 * * page 5, lines 4-27 * * figure 1 * | 1-15 | INV. G06N3/044 G06N3/0475 |

TECHNICAL FIELDS
SEARCHED (IPC)

G06N

The present search report has been drawn up for all claims

| Place of search | Date of completion of the search | Examiner |
|---|---|---|
| The Hague | 3 June 2025 | Bykowski, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)